# EUROPEAN PATENT APPLICATION

(11) **EP 4 570 368 A1**
(43) Date of publication of application: **18.06.2025**
(21) Application number: 23216214.9
(22) Date of filing: 13.12.2023
(51) Int. Cl.: B01F 33/452, B01F 35/21, B01F 35/212, G01F 1/075

(54) **ELECTROMAGNETIC STIRRING AND DETECTING SYSTEM FOR CHEMICAL ANALYSIS SYSTEM**

(71) Applicant: ABB SCHWEIZ AG, 5400 Baden (CH)
(72) Inventor: REDFERN, Adam, Gloucester, GL2 8NE (GB); DOE, William, Bristol, BS3 5BJ (GB)
(74) Representative: Maiwald GmbH

(57) **Abstract**

The invention relates to an electromagnetic stirring and detecting system (100) for a chemical analysis system, which comprises a magnetic stirring bar (110), which is arrangeable in a measuring cell (10) and configured to be rotatable for agitating a fluid in the measuring cell (10), and an inductor arrangement (120) that comprises at least one inductor (125). The at least one inductor (125) is configured to generate a magnetic field for inducing a motion of rotation of the magnetic stirring bar (110) having an inertia of rotation in a driving mode (161). The at least one inductor is configured to detect a first measuring signal induced by the inertia of rotation of the magnetic stirring bar and indicative of a presence of the magnetic stirring bar and/or a second measuring signal indicative of a presence of a fluid flow into or through the measuring cell in a detecting mode (162).

## Description

### FIELD OF INVENTION

The present disclosure relates to an electromagnetic stirring and detecting system for a chemical analysis system, a chemical analysis system for determining a presence of a magnetic stirring bar and/or a presence of a fluid flow via an inlet of a measuring cell, the use of an electromagnetic stirring and detecting system in a chemical analysis system and a method for operating an electromagnetic stirring and detecting system for a chemical analysis system.

### BACKGROUND

Automatic chemical detection systems often utilize an electromagnetic stirring system to mix a number of fluids via a magnetic stir bar. However, it may be important to ensure the presence of the stir bar and to continuously monitor if the stir bar may not be lost, mechanically stuck or not fitted.

Further, such chemical detection systems typically require a sample flow detection that may employ a float switch or a dedicated flow meter on the sample inlet of the device. In particular, a float switch with supporting mechanical apparatus or a turbine/thermal flow meter may be used as examples. These devices may be costly and require space in the construction design of the detection system.

### SUMMARY

It may be seen as an objective of the invention to provide an improved automatic detection system which enables monitoring the movement of a stir bar of the stirring system for optimizing the detection conditions.

The objective is achieved by the subject matter of the independent claims. The dependent claims, the following description and the drawings show embodiments of the invention.

According to a first aspect of the present disclosure, an electromagnetic stirring and detecting system is provided for a chemical analysis system, which comprises a magnetic stirring bar that is arrangeable in a measuring cell and configured to be rotatable for agitating a fluid in the measuring cell, and an inductor arrangement that comprises at least one inductor. The at least one inductor is configured to generate a magnetic field for inducing a motion of rotation of the magnetic stirring bar having an inertia of rotation in a driving mode. Further, the at least one inductor is configured to detect a first measuring signal induced by the inertia of rotation of the magnetic stirring bar and indicative of a presence of the magnetic stirring bar in a detecting mode.

By using the electromagnetic stirring and detecting system, a means of automatically detecting the magnetic stirring bar may be enabled by an addition of additional circuitry to an pre-existing inductor arrangement to allow for a stirrer detection to be carried out inside of the measuring cell or cuvette of the chemical analysis system. In other words, the at least one inductor of the inductor arrangement may be enabled momentarily and then turned off. The at least one detector may be configured to sense the back electromagnetic field due to the continued rotation of the magnetic stirring bar following an initial period of active stirring.

The first measuring signal that may be detected by the at least one inductor may be a first voltage signal, which may be induced by the rotation of the magnetic stirring bar driven by the inertia of the rotation of the stirring bar onto the at least one inductor. The at least one inductor of the inductor arrangement, which may be configured as a sensor, may generate a signal which may be processed by some additional circuitry or software which may output a high or low signal based on the presence of the magnetic stirring bar.

According to an embodiment, the at least one inductor may be configured to generate a magnetic field for a predefined time interval for momentarily inducing the motion of rotation of the magnetic stirring bar and increasing the inertia of rotation.

According to another embodiment, the at least one inductor may be configured to be deactivated to remove the magnetic field, before being switched into the detecting mode to detect the first measuring signal.

In other words, the at least one inductor may be configured to be deenergized before the at least one inductor may be switched into the detecting mode or sensing mode to detect the first measuring signal.

According to another embodiment, the magnetic stirring bar may be configured to rotate about an axis of rotation for agitating the fluid and for causing the fluid to swirl in the measuring cell.

According to another embodiment, the at least one inductor may comprise a plurality of inductors. The plurality of inductors may be arranged axially around the axis of rotation of the magnetic stirring bar.

For example, the magnetic field may be generated by sequentially powering or energizing the plurality of the inductors in a clockwise direction or in a counterclockwise direction. The powering of the inductors in a certain order and/or at a certain frequency may produce a rotating magnetic field, causing the magnetic stirring bar to spin or rotate for agitating the fluid.

According to another embodiment, the inductor arrangement may further comprise a sensing circuitry, which may be electronically connected ot the at least one inductor and configured to detect the motion of the magnetic stirring bar.

For example, the sensing circuitry may be electronically connected to one of the plurality of inductors as a single circuitry for the electromagnetic stirring and detecting system.

In this way, the at least one inductor may be reused or dual-used in the driving mode and the detecting mode, advantageously saving cost and resulting in a compact construction of the electromagnetic stirring and detecting system.

According to another embodiment, the electromagnetic stirring and detecting system may further comprise a control module, which may comprise a driving circuitry and a detecting circuitry.

The driving mode may be electronically connected to the at least one inductor and configured to activate the at least one inductor to generate the magnetic field. In other words, the driving modemay be configured to activate the inductor arrangement, for example, by sequentially activating the plurality of inductors in a clockwise direction of in a counterclockwise direction, so that an rotating magnetic field may be generated for inducing the coupled magnetic stirring bar inside the measuring cell.

The detecting mode may be electronically connected to the at least one inductor and configured to detect the first measuring signal for determining the presence of the motion of rotation and the presence of the magnetic stirring bar by means of the sensing circuitry.

The first measuring signal or the second measuring signal induced by the rotating magnetic stirring bar may be in the mV range. The control module may further comprise an amplifier, which may be configured to amplify a low amplitude signal, and/or a microprocessor for direct processing the first or second measuring signal. The low amplitude signal may be processed in a hardware in various ways, for example, passed into a trigger, for example a Schmitt trigger, which may be configured to produce a digital output, if the signal produced may exceed a set point. Alternatively, the signal may be amplified and read directly into the analog input of a microcontroller.

The additional sensing circuitry to the pre-existing driving circuitry of the inductor arrangement may advantageously reduce a construction and fabrication cost, since the sensing circuitry may be easily modified and the sensing circuitry may be arranged in a predefined small additional area on the PCB board.

According to another embodiment, the control module may further comprise a switch element, which may be configured to switch between the driving mode and the detecting mode.

According to another embodiment, the at least one inductor may be configured to determine an absence of the magnetic stirring bar by means of the sensing circuitry in the detecting mode, if the first measuring signal induced by the inertia of rotation of the magnetic stirring bar may be missing or below a predefined limit.

In other words, the inductor arrangement of the electromagnetic stirring and detecting system may be designed to check and monitor that the magnetic stirring bar is present or absent in the measuring cell. If the stirring bar is determined to be absent or lost during the cleaning process due to a very small size of the magnetic stirring bar in the measuring cell, it may result in that the fluid, for example the regent liquids required for a colorimetric or titrimetric process may not be suitably mixed, causing inaccuracies in the measurement of the sample fluid. Also, it may be of relevance for the accurate chemical analysis measurements to timely detect the abnormality of the stirring bar if the stirring bar may become stuck or missing during the operation of the measuring cell. As such, the electromagnetic stirring and detecting system may result in a more reliable and accurate detecting and monitoring system having the effective agitation process for the sample fluid to be sufficiently stirred, mixed and/or reacted in the measuring cell for the chemical analysis measurement.

According to another embodiment, the magnetic stirring bar may comprise a cylindrical shape or an oval shape. Alternatively, the magnetic stirring bar may comprise a bearing neck.

The magnetic stirring bar may not be limited to the cylindrical shape or the oval shape, but may comprise a different shape which may fit the shape of the bottom of the measuring cell. The magnetic stirring bar may be of any shape, for example but not limited to a X-shape or a puck shape. Alternatively, the magnetic stirring bar may be designed to be an oval, a pill, a bar, or a triangle.

According to another embodiment, the measuring cell may comprise an inlet, which may be arranged at the same level as the magnetic stirring bar and configured to allow the fluid flowing into the measuring cell at a flow rate.

The fluid may be a liquid to be detected by means of the measuring cell. The liquid to be detected may be a sample liquid, a reagent liquid and/or a mixture liquid of the sample liquid and the reagent liquid. The fluid may be, but not limited to, a pressurized fluid from a pipe or tank, a bottle of fluid at atmospheric pressure.

The at least one inductor may further be configured to detect a second measuring signal induced by a predefined movement of the magnetic stirring bar, while the fluid flowing into the measuring cell, and indicative of a presence of a fluid flow via the inlet in the detecting mode.

Using the inductor arrangement having the at least one inductor, the electromagnetic stirring and detecting system may allow utilizing the existing electromagnetic stirring system to detect the rotation of the stirring bar inside the measuring cell which may be due to the flow of the fluid the fluid that may be introduced into the measuring cell via the inlet. When the stirring bar spins or rotates or moves as a result of the fluid flow, the movement may be detected as the second measuring signal, which may be a digital or analog electronic signal.

The inlet or the fluid flow entry may be arranged at the bottom of the measuring cell, for example at the same height as the magnetic stirring bar, so that the fluid may enter tangentially to a cylindrical part of the measuring cell to provide a suitable rotation of the magnetic stirring bar.

According to another embodiment, the control module may be configured to activate the sensing circuitry by means of the switch element and to detect the second measuring signal for determining the presence of the predefined movement of the magnetic stirring bar and the presence of the Ifuid flow via the inlet.

By sensing the induced voltage in the one or the plurality of inductors, the fluid flow state may be obtained and assessed. The sensing circuitry may be connected to one or a plurality of inductors. For example, the sensing circuitry may be connected to a single inductor. However, by connecting to multiple inductors, a greater sensitivity of the sensing circuitry may be achieved.

Advantageously, the electromagnetic stirring and detecting system of the present disclosure may reduce the cost of flow detection in the chemical analysis system as only a small addition of circuitry may be required for the sensing circuitry of the detecting circuitry. This may further free up space with the chemical analysis system as footprint or space for a dedicated flow meter may not be required. As such, the electromagnetic stirring and detecting system may comprise a compact construction with the optimized design of the circuit board, on which the sensing circuitry for the detecting mode may be mounted close to the pre-existing circuitry for the driving mode.

Compared to the electromagnetic stirring and detecting system to detect or determine the presence of the fluid flow in situ, arranging a flow switch inside the chemical analyser, which may be a pressure based flow switch, a paddle type flow switch or a float switch, may require a relatively large area on the outside of the analysis system. For example, a side sample pot with a reed switch affixed at a set position may be used as a flow cell. When there is a sufficient flow through the system a magnetic float will raise and cause the contacts of the Reed switch to close. The limitations of this system may be that it does not measure the flow through the measuring cuvette and that the system requires a relatively large area on the outside of the analyzer system.

In the electromagnetic stirring and detecting system, the inductor arrangement may allow the detection of the presence of the fluid flow even at a very low flow rate. The flow detection may indicate the presence of the fluid flow above a certain threshold, so the detection may be performed in a binary detection mode.

The electromagnetic stirring and detecting system of the present disclosure may allow a dual-use or a re-use of the inductor arrangement with integrated stirring circuitry and flow detecting circuitry.

According to a second aspect, a chemical analysis system is provided for determining a presence of a magnetic stirring bar and/or a presence of a fluid flow via an inlet of a measuring cell. The chemical analysis system comprises an electromagnetic stirring and detecting system of the present disclosure and a detecting arrangement, which is configured to detect the fluid in the measuring cell.

For example, the detecting arrangement may be, but not be limited to be, arrangeable in a top reagion of the measuring cell or laterally to the measuring cell. In particular, the detecting arrangement may be placed into the top of the measuring cell if the measurement may be performed, for example, for a pH or chlorine sample.

Alternatively, the detecting arrangement may be arranged laterally at a predefined distance to the side wall of the measuring cell or at a side wall of the measuring cell. Alternatively or additionally, the detecting arrangement may be arranged in or around the measuring cell for the optical, electrical or electrochemical measurement.

For example, the detecting arrangement may be arranged laterally at a predefined distance to the side wall of the measuring cell or at a side wall of the measuring cell. Alternatively, the detecting arrangement may be arranged below or above the measurement cell. Alternatively or additionally, the detecting arrangement may be arranged in or around the measuring cell for the optical, electrical or electrochemical measurement.

According to a third aspect, the use of an electromagnetic stirring and detecting system of the present disclosure is provided in a chemical analysis system of the present disclosure.

According to a fourth aspect, a method is provided for operating an electromagnetic stirring and detecting system for a chemical analysis system. The method comprises the following steps:
- arranging a magnetic stirring bar in a measuring cell for agitating a fluid in the measuring cell;
- generating, by means of at least one inductor of an inductor arrangement, a magnetic field for inducing a motion of rotation of the magnetic stirring bar having an inertia of rotation by activating the at least one inductor by means of a driving mode of a control module;
- switching from the driving mode to a detecting mode of the control module for detecting, by means of a sensing circuitry a first measuring signal, or for detecting a second measuring signal;
- determining, based on the detected first measuring signal, the presence of the motion of rotation and the presence of the magnetic stirring bar, or, based on the detected second measuring signal, the presence of a predefined movement of the magnetic stirring bar and the presence of a fluid flow via an inlet into or through the measuring cell.

Optionally, the step of the switching from the driving mode to the detecting mode of the control module for detecting a first measuring signal or a second measuring signal may comprise the step of deactivating the driving mode before activating the detecting mode of the control module, for example, by means of a switch element.

For example, it may be provided that the detecting mode or the sending mode, by means of the sensing circuitry, may continuously be switched on. When the driving mode may be switched on, the measuring signal may be disregarded by the control module. Alternatively, the driving mode and the detecting mode may not be activated concurrently.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

There may be provided a computer program that comprises machine-readable instructions that, when executed by one or more computers and/or compute instances, cause the one or more computers and/or compute instances to perform a method for operating an electromagnetic stirring and detecting system for a chemical analysis system.

There may be provided a non-transitory machine-readable data carrier and/or a download product with the computer program. A download product is an instance of the computer program that may be sold and downloaded online for immediate fulfilment in lieu of physically shipping a machine-readable data carrier.

There may be provided one or more computers and/or compute instances with the computer program comprising machine-readable instructions that, when executed by one or more computers and/or compute instances, cause the one or more computers and/or compute instances to perform a method for operating an electromagnetic stirring and detecting system for a chemical analysis system, and/or with the machine-readable data carrier and/or download product with the computer program.

It should be noted that the above examples may be combined with each other irrespective of the aspect involved. Accordingly, the method may be combined with structural features and, likewise, the apparatus and the system may be combined with features described above with regard to the method.

These and other aspects will be apparent from and elucidated with reference to the embodiments as per the drawings described hereinafter.

### BRIEF DESCRIPTION OF THE FIGURES

Examples of the disclosure will be described in the following with reference to the following drawings.
- Fig. 1a: shows schematically a side view of an example of an electromagnetic stirring and detecting system according to the present disclosure;
- Fig. 1b: shows schematically a top view of an example of an electromagnetic stirring and detecting system according to the present disclosure;
- Fig. 2a: shows schematically a side view of an example of an electromagnetic stirring and detecting system according to the present disclosure;
- Fig. 2b: shows schematically a top view of an example of an electromagnetic stirring and detecting system according to the present disclosure;
- Fig. 3: shows schematically an electronic construction of an electromagnetic stirring and detecting system according to the present disclosure;
- Fig. 4: shows schematically a flow chart illustrating a method for operating an electromagnetic stirring and detecting system for a chemical analysis system according to the present disclosure.

The figures are merely schematic representations and serve only to illustrate examples of the disclosure. Identical or equivalent elements are in principle provided with the same reference signs.

### DETAILED DESCRIPTION OF EMBODIMENTS

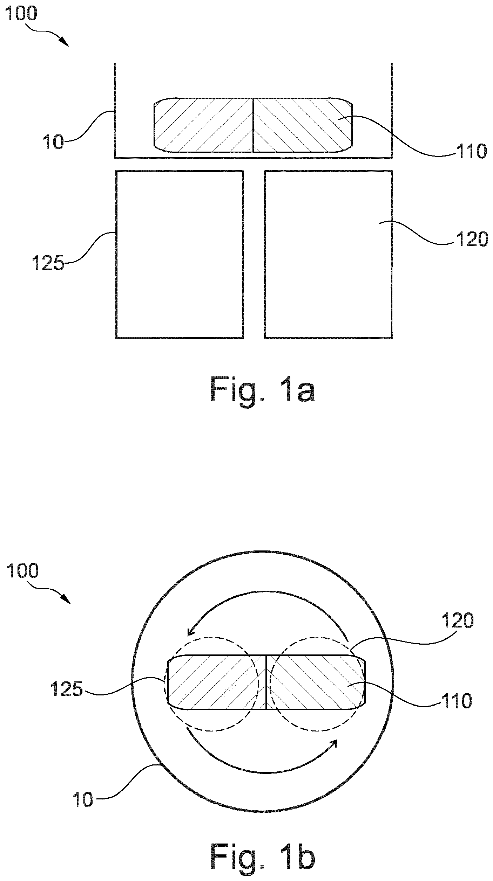

Fig. 1a and Fig. 1b show, respectively and schematically, a side view and a top view of an electromagnetic stirring and detecting system 100 for a chemical analysis system. The chemical analysis system comprises a measuring cell 10 or a measuring cuvette.

The electromagnetic stirring and detecting system 100 comprises a magnetic stirring bar 110, which is arranged in a measuring cell 10 and configured to be rotatable for agitating or stirring a fluid in the measuring cell 10, and an inductor arrangement 120 that comprises at least one inductor 125.

The measuring cell 10 may be a measuring cuvette or a flow cell having a rectangular or cylindrical shape. The measuring cell 10 may be configured to be filled with a fluid or liquid to be optically, chemically or electrically detected by a detecting arrangement that may be arranged laterally to measuring cell 10 or at the side wall of the measuring cell 10. The fluid or liquid to be detected may be a sample liquid, a reagent liquid and/or a mixture liquid of the sample liquid and the reagent liquid. The fluid may be, but not limited to, a pressurized fluid from a pipe or tank, a bottle of fluid at atmospheric pressure. In particular, the magnetic stirring bar 110 may be configured to rotate about an axis of rotation for agitating the fluid and for causing the fluid to swirl in the measuring cell 10.

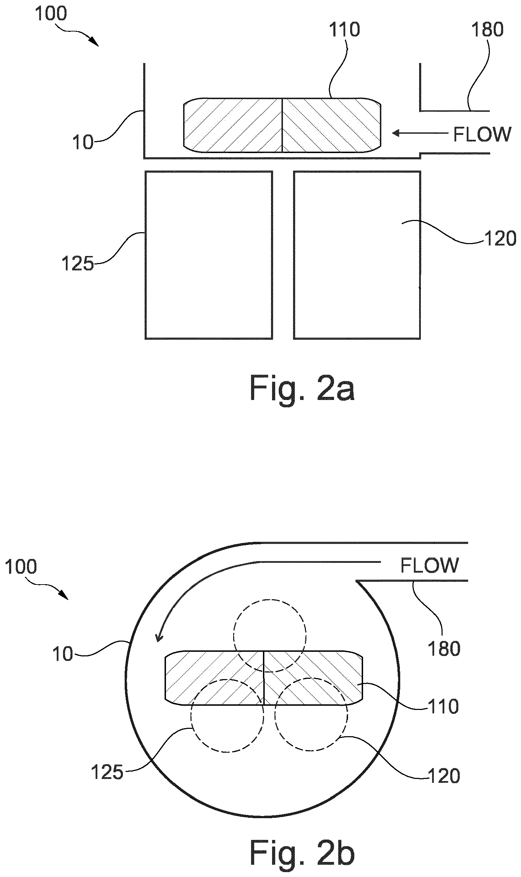

The magnetic stirring bar 110 may comprise a substantially cylindrical shape, as shown in Fig. 1a and Fig. 2a. However, the magnetic stirring bar 110 may comprise a different shape, for example but not limited to an oval shape. Alternatively, the magnetic stirring bar 110 may comprise a bearing neck.

The at least one inductor 125 may comprise a plurality of inductors 125. For example, the at least one inductor 125 of the inductor arrangement 120 may comprise two inductors 125, as shown in Fig. 1a, or three inductors 125, as shown in a top view of a further electromagnetic stirring and detecting system 100 in Fig. 2b.

The plurality of inductors 125 may be arranged axially around the axis of rotation of the magnetic stirring bar. For example, the two inductors in Fig. 1b may be arranged symmetrically about the axis of the rotation of the magnetic stirring bar 110. Compared to the inductor arrangement of Fig. 1b, the three inductors in Fig. 2b may be arranged or distributed around the axis of the rotation of the magnetic stirring bar 110. The axis of the rotation of the magnetic stirring bar 110 may be in parallel to or overlap with the centerline of the measuring cell 10.

The inductor arrangement 120 may be arranged below the measuring cell 10, so that the at least one inductor 125 may be configured to couple with the magnetic stirring bar 110 inside the measuring cell 10 and to generate a magnetic field for inducing a motion of rotation of the magnetic stirring bar 110 which may then has an inertia of rotation. For example, the at least one inductor 125 may be configured to generate a magnetic field for a predefined time interval for momentarily inducing the motion of rotation of the magnetic stirring bar 110 and increasing the inertia of rotation.

The at least one inductor 125 may be configured to detect a first measuring signal induced by the inertia of rotation of the magnetic stirring bar 110 and indicative of a presence of the magnetic stirring bar 110 in a driving mode 161. Further, the at least one inductor 125 may be configured to be deactivated to remove the magnetic field, before being switched into the detecting mode 162 to measure the first measuring signal. For example, the first measuring signal that may be detected by the at least one inductor 125 of the inductor arrangement may be a first voltage signal, which may be induced by the rotation of the magnetic stirring bar 110 onto the at least one inductor 125, such as one or a plurality of inductors 125.

The inductor arrangement 120 in Fig. 1a and Fig. 2a may be designed to connect one of more of the plurality of inductors 125 to a sensing circuitry 1621 for the detecting mode or the sensing mode. For example, a single inductor 125 of the inductor arrangement 120 may be electronically connected to the sensing circuitry 1621.

The axially arranged inductors 125 may be placed in the close vicinity or proximity of one another. It may thus be possible, that only one inductor 125 may be required to detect the movement or the rotation of the magnetic stirring bar 110. The at least one inductor 125 may further be configured to determine an absence of the magnetic stirring bar 110 in the detecting mode 162, if the first measuring signal or the first voltage signal is missing or below a predefined limit.

Additionally, the control module 160 may be configured to generate a warning signal, for example a diagnostic message, when the absence of the magnetic stirring bar 110 may be determined by one or more of the inductor 125.

Further, Fig. 2a shows schematically that the measuring cell 10 may further comprise an inlet 180, which may be arranged at the same level as the magnetic stirring bar 110 or alternatively above the magnetic stirring bar 110 and configured to allow the fluid flowing into the measuring cell 10 at a flow rate and causing a predefined movement of the magnetic stirring bar 110.

The at least one inductor 150 may be configured to detect, in the detecting mode 162 using the common sensing circuitry 1621, a second measuring signal, which may be a second voltage signal which may be induced by the predefined movement of the magnetic stirring bar 110 onto the at least one inductor 125, while the fluid flowing into the measuring cell 10. For example, the predefined movement of the magnetic stirring bar 110 may a predefined translational and/or rotational movement. The second measuring signal may be indicative of a presence of the fluid flow via the inlet 180. In other words, by means of the second measuring signal, the at least one inductor 125 may be configured to determine the presence of the fluid flow when flowing in the measuring cell 10 at a flow rate via the inlet 180.

For example, the inlet 180 as the fluid flow entry may be arranged in the bottom region of the measuring cell 10, in particular, at the same height as the magnetic stirring bar 110, so that the fluid may enter tangentially to a cylindrical part of the measuring cell 10 to provide a suitable movement or rotation of the magnetic stirring bar 110. Alternatively or additionally, the inlet 180 may be arrangend above the magnet stirring bar 110.

The first measuring signal or the second measuring signal induced by the rotating magnetic stirring bar 110 may be in the mV range. The control module 160 may further comprise an amplifier, which may be configured to amplify a low amplitude signal, and/or a microprocessor for direct processing the first or second measuring signal. The low amplitude signal may be processed in a hardware in various ways, for example, passed into a trigger, for example a Schmitt trigger, which may be configured to produce a digital output, if the signal produced may exceed a set point.

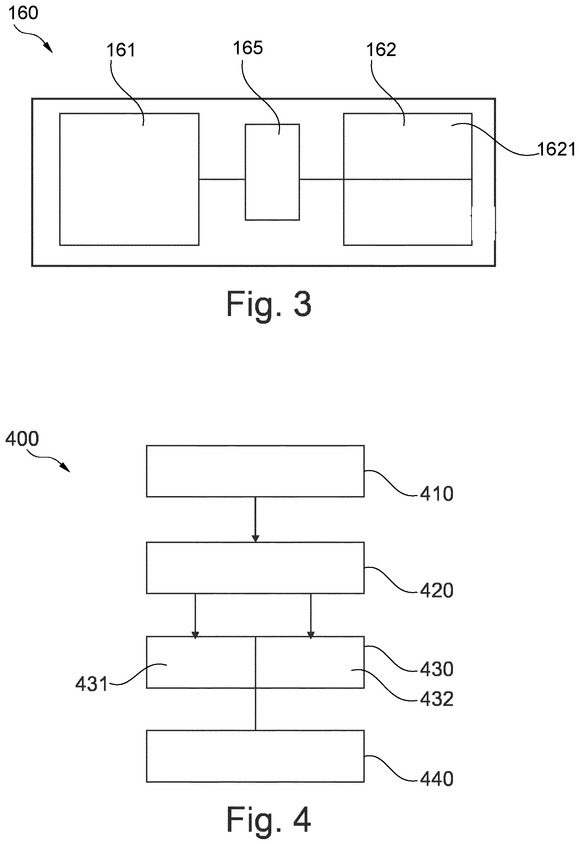

Fig. 3 shows schematically an electronic construction of an electromagnetic stirring and detecting system 100, which comprises a control module 160 for controlling the inductor arrangement 120, in particular, the at least one inductor 125 and the at least one detector 150.

The control module 160 may be configured to switch the at least one inductor 125 between a driving mode 161 and a detecting mode 162. The driving mode 161 may be electronically connected to the at least one inductor 125 and configured to activate the at least one inductor 125 to generate the magnetic field. The detecting mode 162 may be electronically connected to the at least one inductor 125 and configured to detect the first measuring signal or the second measuring signal, which may be induced by the motion of the magnetic stirring bar 110 onto the at least one inductor 125, when the driving mode 161 is turned off or deactivated.

The detecting mode 162 may be activated by means of a sensing circuitry 1621, so that the plurality of inductors 125 may be activated and configured to detect the first measuring signal for determining the presence of the motion of rotation and the presence of the magnetic stirring bar 110, or to detect the second measuring signal for determining the presence of the predefined movement of the magnetic stirring bar 110 and the presence of the fluid flow via the inlet 180 into or through the measuring cell 10.

The control module 160 may further comprise a switch element 165, which may be configured to switch between the driving mode 161 and the detecting mode 162. In other words, the control module 160 may be configured to activate the driving mode 161 to allow the at least one inductor 125 generating the magnetic field for inducing the motion of rotation of the magnetic stirring bar 110, or to turn off or deactivate the driving mode 161 and activate the detecting mode 162 to allow the at least one inductor 125 detecting a first measuring signal using the sensing circuitry 1621 for determining the presence of the magnetic stirring bar 110 or a second measuring signal using the common sensing circuitry 1621 for determining the presence of the fluid flow via the inlet 180.

In order to perform a chemical analysis measurement in the chemical analysis system, a detecting arrangement, which may comprise an optical, a chemical and/or an electrical detecting element and may be arrangeable laterally to the measuring cell 10 or at the side wall of the measuring cell 10.

Fig. 4 shows a flow chart illustrating an embodiment of a method 400 for operating an electromagnetic stirring and detecting system 100 for a chemical analysis system.

In step 410, a magnetic stirring bar 110 is arranged in a measuring cell 10 for agitating or stirring a fluid in the measuring cell 10.

In step 420, a magnetic field is generated, by means of at least one inductor 125 of an inductor arrangement 120, for inducing a motion of rotation of the magnetic stirring bar 110 having an inertia of rotation by activating the at least one inductor 125 by means of a driving mode 161 of a control module 160.

For example, the magnetic field may be generated by sequentially powering or energizing the plurality of the inductors 125 in a clockwise direction or in a counterclockwise direction.

In step 430, the inductor arrangement 120 is switched from the driving mode 161 to a detecting mode 162 of the control module 160 for detecting 431, by means of a sensing circuit 1621, a first measuring signal, or for detecting 432 a second measuring signal.

Optionally, the control unit may be switched, by means of a switch element 165, from the driving mode 161 to the detecting mode 162 for detecting a first measuring signal or a second measuring signal by deactivating the driving mode 161 before activating the detecting mode 162 of the control module 160.

Finally, in step 440, the presence of the motion of rotation and the presence of the magnetic stirring bar 110 may be determined, based on the detected first measuring signal. Alternatively, in step 440, the presence of a predefined movement of the magnetic stirring bar 110 and the presence of a fluid flow via an inlet 180 of the measuring cell 10 may be determined, based on the detected second measuring signal.

In order to conduct the presence measurement of the magnetic stirring bar 110, the stirrer driving mode 161 may be enabled to induce a rotating motion in the magnetic stirring bar 110. The rotation of the magnetic stirring bar 110 may cause the fluid in the measuring cell 10 to swirl, which may increase the inertia of the rotation. The driving mode 161 may be turned off and a measurement may then be conducted. Although the magnetic stirring bar 110 is no longer being driven, the inertia of rotation may cause the stirring bar 110 to continue to stir or rotate within the measuring cell 10 momentarily. Thus for a short period of time the stirring bar 110 may induce a voltage into one or more of the inductors 125.

When the chemical analysis system 100 is switched to check for the presence of the magnetic stirring bar 110, the driving circuitry 161 may be turned off or deactivated to ensure no interference from the electromagnetic field generated from the other coils of the plurality of inductors 150.

Alternatively, when the chemical analysis system 100 is switched to detect the fluid flow, the driving circuitry 161 may be turned off and the at least one inductor 151 may be switched into the detecting or sensing mode. If the fluid flow is present, the movement of the stirring bar 110 may induce the second measuring signal, which may be a low amplitude voltage into the inductors 125 which may be indicative of the fluid flow occurring. If no signal is detected by the inductors 125, this may be indicative of no fluid flow occurring. The low amplitude signal may be amplified by the amplifying element and connected to the microprocessor for direct processing. The low amplitude signal may be processed in the hardware in various ways, for example passed into the triggering element, such as a Schmitt trigger, that may produce a digital output if the signal produced exceeds a set point. In this way, the inductor arrangement 120 may allow the detection of the presence of the fluid flow even at a very low flow rate.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SIGNS

- 10: measuring cell
- 100: electromagnetic stirring and detecting system
- 110: magnetic stirring bar
- 120: inductor arrangement
- 125: at least one inductor
- 160: control module
- 161: driving mode
- 162: detecting mode
- 1621: sensing circuit
- 165: switch element
- 180: inlet
- 400: method for operating an electromagnetic stirring and detecting system
- 410: step of arranging a magnetic stirring bar in a measuring cell
- 420: step of generating a magnetic field
- 430: step of switching from the driving circuitry to the detecting circuitry
- 440: step of determining the presence of the magnetic stirring bar or the presence of a fluid flow

## Claims

1. Electromagnetic stirring and detecting system (100) for a chemical analysis system, comprising:
a magnetic stirring bar (110), arrangeable in a measuring cell (10) and configured to be rotatable for agitating a fluid in the measuring cell (10),
an inductor arrangement (120) comprising at least one inductor (125);
wherein the at least one inductor (125) is configured to generate a magnetic field for inducing a motion of rotation of the magnetic stirring bar (110) having an inertia of rotation in a driving mode (161);
wherein the at least one inductor (125) is configured to detect a first measuring signal induced by the inertia of rotation of the magnetic stirring bar (110) and indicative of a presence of the magnetic stirring bar (110) in a detecting mode (162).

2. The electromagnetic stirring and detecting system (100) according to claim 1,
wherein the at least one inductor (125) is configured to generate a magnetic field for a predefined time interval for momentarily inducing the motion of rotation of the magnetic stirring bar (110) and increasing the inertia of rotation.

3. The electromagnetic stirring and detecting system (100) according to claim 1 or 2,
wherein the at least one inductor (125) is configured to be deactivated to remove the magnetic field, before being switched into the detecting mode to detect the first measuring signal.

4. The electromagnetic stirring and detecting system (100) according to one of the preceding claims,
wherein the magnetic stirring bar (110) is configured to rotate about an axis of rotation for agitating the fluid and for causing the fluid to swirl in the measuring cell (10).

5. The electromagnetic stirring and detecting system (100) according to one of the preceding claims,
wherein the at least one inductor (125) comprises a plurality of inductors; wherein the plurality of inductors are arranged axially around the axis of rotation of the magnetic stirring bar (110).

6. The electromagnetic stirring and detecting system (100) according to claim 5,
wherein the inductor arrangement (120) further comprises a sensing circuitry (1621), electronically connected to the at least one inductor (125) and configured to detect the motion of the magnetic stirring bar (110).

7. The electromagnetic stirring and detecting system (100) according to one of the preceding claims, further comprising:
a control module (160) comprising a driving mode (161) and a detecting mode (162);
wherein the driving mode (161) is electronically connected to the at least one inductor (125) and configured to activate the at least one inductor (125) to generate the magnetic field;
wherein the detecting mode (162) is electronically connected to the at least one inductor (125) and configured to detect the first measuring signal for determining the presence of the motion of rotation and the presence of the magnetic stirring bar (110) by means of the sensing circuitry (1621).

8. The electromagnetic stirring and detecting system (100) according to claim 7,
wherein the control module (160) further comprises a switch element (165), configured to switch between the driving mode (161) and the detecting mode (162).

9. The electromagnetic stirring and detecting system (100) according to one of the preceding claims,
wherein the at least one inductor (125) is configured to determine an absence of the magnetic stirring bar (110) by means of the sensing circuit (1621) in the detectiong mode (162), if the first measuring signal induced by the inertia of rotation of the magnetic stirring bar (110) is missing or below a predefined limit.

10. The electromagnetic stirring and detecting system (100) according to one of the preceding claims,
wherein the magnetic stirring bar (110) comprises a cylindrical shape or an oval shape; or
wherein the magnetic stirring bar (110) comprises a bearing neck.

11. The electromagnetic stirring and detecting system (100) according to one of the preceding claims,
wherein the measuring cell (10) comprises an inlet (180), arranged at the same level as the magnetic stirring bar (110) and configured to allow the fluid flowing into the measuring cell (10) at a flow rate;
wherein the at least one inductor (125) is further configured to detect a second measuring signal induced by a predefined movement of the magnetic stirring bar (110) while the fluid flowing into the measuring cell (10) and indicative of a presence of a fluid flow via the inlet (180) in the detecting mode (162).

12. The electromagnetic stirring and detecting system (100) according to claim 11,
wherein the control module (160) is configured to activate the sensing circuitry (1621) by means of the switch element (165) and to detect the second measuring signal for determining the presence of the predefined movement of the magnetic stirring bar (110) and the presence of the fluid flow via the inlet (180).

13. Chemical analysis system for determining a presence of a magnetic stirring bar (110) and/or a presence of a fluid flow via an inlet (180) of a measuring cell (10), comprising
an electromagnetic stirring and detecting system (100) according to one of the preceding claims 1 to 12, and
a detecting arrangement, configured to detect the fluid in the measuring cell (10).

14. Use of an electromagnetic stirring and detecting system (100) according to one of the claims 1 to 12 in a chemical analysis system according to claim 13.

15. Method (400) for operating an electromagnetic stirring and detecting system (100) for a chemical analysis system, comprising the steps of:
arranging (410) a magnetic stirring bar (110) in a measuring cell (10) for agitating a fluid in the measuring cell (10);
generating (420), by means of at least one inductor (125) of an inductor arrangement (120), a magnetic field for inducing a motion of rotation of the magnetic stirring bar (110) having an inertia of rotation by activating the at least one inductor (125) by means of a driving mode (161) of a control module (160);
switching (430) from the driving mode (161) to a detecting mode (162) of the control module (160) for detecting (431), by means of a sensing circuit (1621), a first measuring signal or a second measuring signal;
determining (440), based on the detected first measuring signal, the presence of the motion of rotation and the presence of the magnetic stirring bar (110), or, based on the detected second measuring signal, the presence of a predefined movement of the magnetic stirring bar (110) in the measuring cell (10) and the presence of a fluid flow via an inlet (180) into or through the measuring cell (10).
